# EUROPÄISCHE PATENTANMELDUNG

(11) **EP 1 911 967 A1**
(43) Veröffentlichungstag der Anmeldung: **16.04.2008**
(21) Anmeldenummer: 07018775.2
(22) Anmeldetag: 25.09.2007
(51) Int. Cl.: F02P 23/04

(54) **Laserzündvorrichtung**

(30) Priorität: 03.10.2006 AT 16472006
(71) Anmelder: GE Jenbacher GmbH & Co. OHG, 6200 Jenbach (AT)
(72) Erfinder: Klausner, Johann, 6391 St. Jakob i.H. (AT); Fuchs, Jochen, 6020 Innsbruck (AT); Graf, Josef, 7503 Grosspetersdorf (AT); Kofler, Heinrich, 1060 Wien (AT)
(74) Vertreter: Hofinger, Stephan

(57) **Zusammenfassung**

Laserzündvorrichtung für eine Brennkraftmaschine, insbesondere für einen Gas-Otto-Motor, mit mindestens einer Pumplichtquelle (1) und mindestens einem von der Pumplichtquelle (1) longitudinal gepumpten, insbesondere passiv gütegeschalteten, Laserresonator sowie insbesondere mit mindestens einer Einkoppeloptik (3) zum Einkoppeln von Pumplicht (4) der Pumplichtquelle (1) in den Laserresonator (2), wobei, vorzugsweise in einem Fokus (6) der Einkoppeloptik (3), ein erster Strahldurchmesser (12) des in den Laserresonator (2) einzubringenden oder eingebrachten Pumplichts (4), gemessen bei einer Pumplichtintensität (I_{0,6}) von 60 % der maximalen Pumplichtintensität (Iₘₐₓ), mindestens 80 %, vorzugsweise mindestens 85 % eines zweiten Strahldurchmessers (13), gemessen bei einer Pumplichtintensität (I_{0.135}) von 13,5 % der maximalen Pumplichtintensität (Iₘₐₓ), beträgt.

## Beschreibung

Die vorliegende Erfindung betrifft eine Laserzündvorrichtung für eine Brennkraftmaschine, insbesondere für einen Gas-Otto-Motor, mit mindestens einer Pumplichtquelle und mindestens einem von der Pumplichtquelle longitudinal gepumpten, insbesondere passiv gütegeschalteten, Laserresonator sowie insbesondere mit mindestens einer Einkoppeloptik zum Einkoppeln von Pumplicht der Pumplichtquelle in den Laserresonator. Darüber hinaus betrifft die Erfindung eine Brennkraftmaschine mit einer solchen Laserzündvorrichtung.

Gattungsgemäße Laserzündvorrichtungen werden zumindest im Testbetrieb bereits zur Zündung von Brennkraftmaschinen eingesetzt. Unter longitudinal gepumpten Laserresonatoren versteht man insbesondere diejenigen Typen, bei denen das Pumplicht parallel oder zumindest annähernd parallel zu der Richtung des von dem Laserresonator erzeugten Laserstrahls in den Laserresonator eingekoppelt wird. Es ist beim Stand der Technik bekannt, dass, um möglichst energiereiches Laserlicht bzw. möglichst energiereiche Laserpulse zu erhalten, die einzelnen Parameter des Resonators perfekt aufeinander abgestimmt sein müssen. Dies gilt insbesondere für die Reflektivität und Krümmung des Auskoppelspiegels, für die Anfangstransmission des Absorbers, für den Dotierungsgrad des laseraktiven Mediums und für die geometrischen Abmessungen des Resonators. All dies sind Möglichkeiten die Energieabgabe der Laserzündvorrichtung durch Verbesserung des Resonators zu optimieren.

Aufgabe der Erfindung ist es, eine weitere Möglichkeit aufzuzeigen, wie möglichst energiereiches Laserlicht bzw. möglichst energiereiche Laserpulse zur Zündung von Brennkraftmaschinen bereitgestellt werden können.

Dies wird bei gattungsgemäßen Laserzündvorrichtungen mit longitudinal gepumpten Laserresonatoren erfindungsgemäß erreicht, indem, vorzugsweise in einem Fokus der Einkoppeloptik, ein erster Strahldurchmesser des in den Laserresonator einzubringenden oder eingebrachten Pumplichts, gemessen bei einer Pumplichtintensität von 60 % der maximalen Pumplichtintensität, mindestens 80 %, vorzugsweise mindestens 85 %, eines zweiten Strahldurchmessers, gemessen bei einer Pumplichtintensität von 13,5 % der maximalen Pumplichtintensität, beträgt.

Der Erfindung liegt somit die Erkenntnis zugrunde, dass auch die Intensitätsverteilung bzw. das Strahlprofil des in den longitudinal gepumpten Laserresonator eingebrachten Pumplichtes einen wesentlichen Einfluss auf die erreichbaren Energien des von der Laserzündvorrichtung bzw. vom Laserresonator abgebbaren Laserlichtes bzw. Laserpulses hat. Es hat sich gezeigt, dass ein homogenisiertes Strahlprofil, wie es durch das Kennzeichen des Anspruchs 1 definiert ist, im Sinne einer maximalen Energieausbeute sehr vorteilhaft zum Pumpen des Laserresonators ist. Qualitativ gesprochen, soll somit eine möglichst breite Intensitätsverteilung über den Durchmesser des Pumplichtes erzeugt werden. Im Gegensatz dazu, hat das beim Stand der Technik verwendete Pumplicht in der Regel eine annähernd Gauß'sche Intensitätsverteilung über den Querschnitt des Pumplichtes, was bedeutet, dass die maximalen Intensitäten auf einen relativ schmalen Strahldurchmesser konzentriert sind. Die Intensität des Pumplichtes ist dabei - wie allgemein üblich - definiert als Energie pro Zeit und Fläche des Pumplichtes und wird in der Einheit [Joule/(Sekunde x Quadratmeter)] angegeben.

Weitere Einzelheiten und Merkmale der Erfindung werden anhand der nachfolgenden Figuren erläutert. Dabei zeigen:
- Fig. 1: die zum Verständnis der Erfindung notwendigen Bauteile von beim Stand der Technik bekannten Laserzündvorrichtungen,
- Fig. 2: Pumplichtprofile von beim Stand der Technik bekannten Laserzündvorrichtungen gemäß Fig. 1,
- Fig. 3 bis 6: verschiedene erfindungsgemäße Intensitätsverteilungen des Pumplichtes im Fokus der Einkoppeloptik im Laserresonator,
- Fig. 7: einen Weg zur Bereitstellung einer solchen Pumplichtintensitätsverteilung und
- Fig. 8: eine schematische Darstellung zur Messung der Pumplichtintensitätsverteilung im Fokus der Einkoppeloptik.

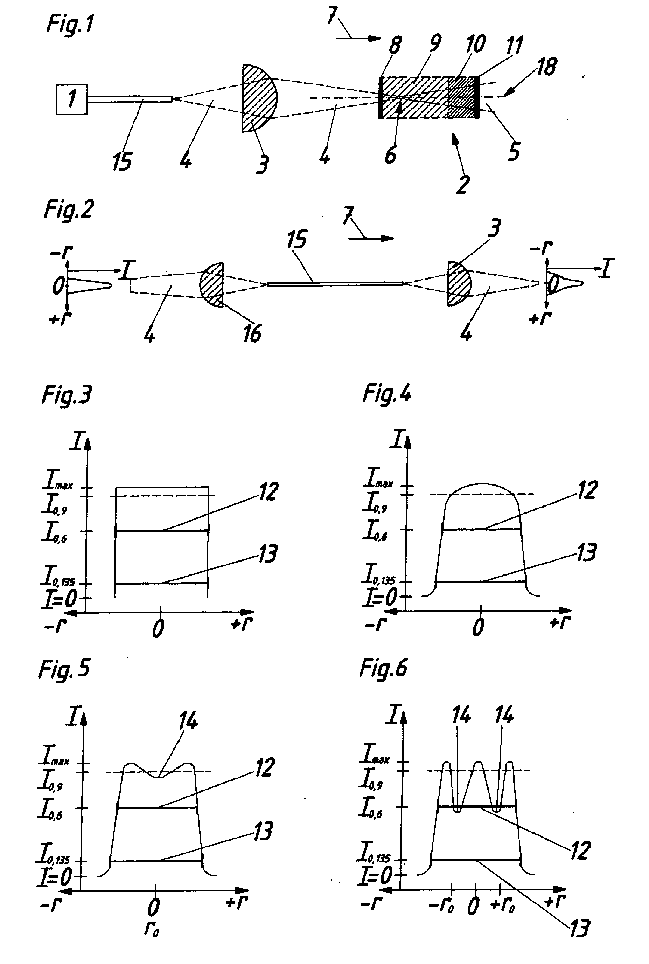

Fig. 1 zeigt zunächst stark schematisiert einen Aufbau von Teilen einer an sich bekannten gattungsgemäßen Laserzündvorrichtung. Diese umfasst zunächst eine zum Beispiel aus Hochleistungslaserdioden mit mehreren Emittern bestehende Pumplichtquelle 1, welche über eine Optik (schematisch dargestellt als Linse 16 in Fig. 2) das Pumplicht 4 in eine Lichtleitfaser 15 einspeist. Die zwischen Ausgang der Lichtleitfaser 15 und dem Laserresonator 2 angeordnete, hier durch eine Linse schematisch dargestellte Einkoppeloptik 3, fokussiert das Pumplicht 4 auf einen Fokus 6, welcher vorzugsweise, im Bereich des Laserresonators 2 oder maximal 50 %, vorzugsweise 20 %, der Länge des Laserresonators 2 vor dem Laserresonator 2 liegt. Besonders bevorzugt ist es, wenn der Fokus 6 im Eingangsspiegel 8 oder im laseraktiven Medium 9 liegt.

In Fig. 1 ist ein an sich bekannter, longitudinal gepumpter, passiv gütegeschalteter Laserresonator 2 dargestellt. Er besteht aus dem Eingangsspiegel 8, dem laseraktiven Medium 9, dem Q-Switch (passiver Güteschalter) 10 und dem Ausgangsspiegel 11. Als laseraktives Medium kann zum Beispiel Nd:YAG und als Q-Switch Cr⁴⁺:YAG verwendet werden. Bei den gattungsgemäßen longitudinal gepumpten Laserresonatoren 2 wird das sich in Richtung 7 ausbreitende Pumplicht 4 im Wesentlichen parallel zum vom Resonator 2 abgegebenen Laserlicht bzw. Laserlichtpuls 5 in den Resonator 2 eingekoppelt.

Fig. 2 zeigt auf der linken Seite eine beim Stand der Technik übliche Verteilung der Intensität I über den Durchmesser bzw. Radius r des von der Pumplichtquelle 1 abgegebenen und in die Lichtleitfaser 15 eingespeisten Pumplichtes 4. Die dargestellte Intensitätsverteilung I ist - wie auch alle anderen hier gezeigten Intensitätsverteilungen I - in einer Ebene senkrecht zur Ausbreitungsrichtung 7 bzw. zur Optischen Achse 18 des Pumplichtes, also quasi in einer Draufsicht auf das Pumplicht, gemessen. r bezeichnet den radialen Abstand von der bei r=0 angeordneten Optischen Achse 18. Beim Stand der Technik sind die Pumplichtquelle 1 sowie die Übertragungseinrichtung (hier bestehend aus Linse 16, Lichtleitfaser 15 und Einkoppeloptik 3) so ausgelegt, dass im Laserresonator 2 ein in Fig. 2 im rechten Diagramm dargestelltes Intensitätsprofil mit einer annährend gaußförmigen Intensitätsverteilung I im Fokus 6 erzeugt wird. Bei der in der rechten Darstellung gezeigten Intensitätsverteilung I gemäß des Standes der Technik ist die meiste Energie des Pumplichtes 4 auf einen relativ schmalen Kernbereich des Strahldurchmessers konzentriert.

Gemäß der Erfindung hat sich nun gezeigt, dass der Energiegehalt des vom Laserresonator 2 abgegebenen und zur Zündung in einen Brennraum einzuführenden Laserlichtes bzw. Laserlichtpulses 5 erhöht werden kann, wenn die Intensität I des in den Laserresonator 2 eingespeisten Pumplichtes 4 homogenisiert, also gleichmäßiger auf einen breiteren Strahldurchmesser verteilt wird. Dabei hat sich herausgestellt, dass eine solche Erhöhung der Energie des abgegebenen Laserlichtes bzw. -pulses 5 dann erzielt werden kann, wenn, vorzugsweise im Fokus 6 der Einkoppeloptik 3, ein erster Strahldurchmesser 12 des in den Laserresonator 2 eingebrachten Pumplichtes 4 gemessen bei einer Pumplichtintensität I_{0,6} von 60 % der maximalen Pumplichtintensität Iₘₐₓ, mindestens 80%, vorzugsweise mindestens 85 %, eines zweiten Strahldurchmessers 13, gemessen bei einer Pumplichtintensität I_{0,135} von 13, 5 % der maximalen Pumplichtintensität Iₘₐₓ. beträgt. Intensitätsverteilungen I über den Radius r des Pumplichtes 4, die dieses Kriterium erfüllen, sind beispielhaft in den Fig. 3 bis 6 gezeigt. Fig. 3 zeigt dabei ein idealisiertes Rechteckintensitätsprofil. Bei diesem beträgt der erste Strahldurchmesser 12 gemessen bei einer Pumplichtintensität I_{0,6} von 60 % der maximalen Pumplichtintensität Iₘₐₓ 100 % des zweiten Strahldurchmessers 13 gemessen bei einer Pumplichtintensität I_{0,135} von 13,5 % der maximalen Pumplichtintensität Iₘₐₓ. Ein solches, an sich ideales "Flat Top" Rechteckprofil ist in der Praxis in der Regel nicht erreichbar. Es hat sich gemäß der Erfindung aber gezeigt, dass es auch ausreicht, wenn das Intensitätsprofil des Pumplichtes 4 - wie in Fig. 4 beispielhaft dargestellt - zumindest annähernd rechteckförmig ausgebildet ist. Hier beträgt der erste Strahldurchmesser 12 bei der Pumplichtintensität I_{0,6} rund 86% des zweiten Strahldurchmessers 13 bei I_{0,135}. Fig. 4 zeigt dabei eine besonders bevorzugte Form von Strahlprofilen, bei der im Bereich des Strahldurchmessers 12, also im Bereich einer Pumplichtintensität größer 60 % der maximalen Pumplichtintensität Iₘₐₓ keine relativen Minima vorhanden sind. Der Begriff des relativen Minimums bezieht sich dabei auf seine mathematische Definition, bei der vorgesehen ist, dass ein relatives Minimum im Punkt r₀ immer dann vorliegt, wenn die Intensitätswerte I in der Umgebung von r₀ alle größer sind als I (r₀). Zusätzlich zu dieser allgemein üblichen Definition eines relativen Minimums wird im Sinne dieser Ausführungen erst dann von einem relativen Minimum gesprochen, wenn die Abweichung des Intensitätswertes I des relativen Minimums mindestens 10 % von der maximalen Pumplichtintensität Iₘₐₓ beträgt. Eine entsprechende Linie I_{0,9} bei 90 % des Maximalwertes der Pumplichtintensität Iₘₐₓ ist in den Fig. 3 bis 6 gestrichelt eingezeichnet.

Erfindungsgemäße Intensitätsverteilungen des Pumplichtes 4 können aber nicht nur rechteck- oder annähernd rechteckförmige Profile aufweisen. Es ist vielmehr auch möglich, dass, wie in den Fig. 5 und 6 beispielhaft dargestellt, relative Minima im Sinne der oben erläuterten Definition im Intensitätsprofil vorgesehen sind. Das Beispiel in Fig. 5 zeigt ein Intensitätsprofil, bei dem im Zentrum (r=r₀=0) bzw. auf der optischen Achse 18 ein relatives Intensitätsminimum 14 vorgesehen ist.

Fig. 6 zeigt beispielhaft eine Intensitätsverteilung, bei der innerhalb des ersten Strahldurchmessers 12 zwei voneinander getrennte, relative Minima im Abstand +/- r₀ vom Zentrum (r=0) des Pumplichts 4 vorgesehen sind. Diese relativen Minima 14 können voneinander getrennt sein. Es ist aber auch möglich, dass sie in einer Draufsicht senkrecht zur Ausbreitungsrichtung 7 auf das Pumplicht 4 Teil eines linienförmigen relativen Minimums 14 sind. Besonders bevorzugt ist dabei, wenn das linienförmige relative Minimum in der erwähnten Draufsicht ringförmig ausgebildet ist.

In der Regel ist es günstig, wenn die Pumplichtintensität über den gesamten unteren Strahldurchmesser 13 mindestens 13,5 % der maximalen Pumplichtintensität beträgt oder insbesondere die Pumplichtintensität über den gesamten oberen Strahldurchmesser 12 mindestens 60 % der maximalen Pumplichtintensität beträgt. Dass dies aber nicht zwingend erforderlich ist, zeigt sich bereits an dem Beispiel gemäß Fig. 6. Hier liegen die relativen Minima 14 unterhalb der I_{0,6} -Grenze. Jedenfalls ist zur Bestimmung des ersten und zweiten Strahldurchmessers 12 und 13 jeweils, ungeachtet von gegebenenfalls dazwischen liegenden Minima, die maximal mögliche Breite des Strahldurchmessers heranzuziehen.

Das Pumplicht 4 weist meistens rotationssymmetrische Querschnitte auf. Sollte dies nicht der Fall sein, so sind der erste Strahldurchmesser 12 und der zweite Strahldurchmesser 13 im Bereich ihrer maximalen Erstreckung zu bestimmen.

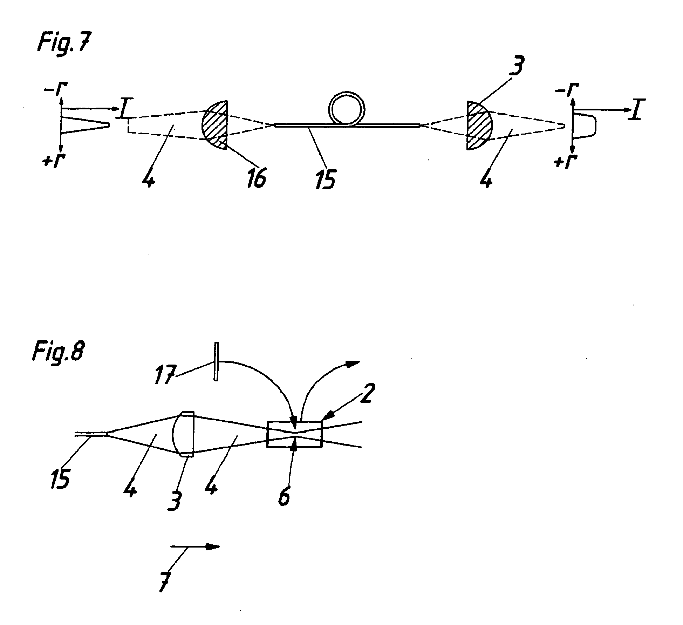

Fig. 7 zeigt eine erste Variante, wie aus den von gewöhnlichen Pumplichtquellen 1 abgegebenen Intensitätsverteilungen (links dargestellt) eine erfindungsgemäße Intensitätsverteilung des Pumplichtes 4 (rechts dargestellt) erzeugt werden kann. Bei dieser Variante wird vorgeschlagen, die Lichtleitfaser 15 zur Herstellung der gewünschten Verteilung der Pumplichtintensität I zu biegen. Hierdurch tritt ein so genanntes "mode mixing" bzw. "mode scrambling" auf, welches zum erwünschten Homogenisieren des Intensitätsprofils I im Fokus 6 führt. Der benötigte Grad des Verbiegens der Lichtleitfaser 15 kann durch entsprechende Versuche bei gleichzeitiger Messung der dadurch, vorzugsweise im Fokus 6, erzeugten Intensitätsverteilung I bestimmt werden.

Alternativ oder zusätzlich zum Faserverbiegen können auch strahlführende oder strahlabsorbierende optische Elemente in der Pumplichtübertragungsvorrichtung oder in der Pumplichtquelle 1 vorgesehen sein. Dies können zum Beispiel diffraktive Optiken oder im Zentrum zerstreuend und am Rand fokussierend wirkende Optiken sein. Diese optischen Bauteile können zusätzlich zur, aber auch integriert in die Einkoppeloptik 3 ausgeführt sein.

Eine dritte Variante zur Bereitstellung der erfindungsgemäßen Intensitätsverteilung sieht vor, dass anstelle einer einzelnen Lichtleitfaser 15 ein Bündel von Lichtleitfasern 15 vorgesehen ist, wobei jede Lichtleitfaser 15 dann vorzugsweise einer eigenen Pumplichtquelle 1 zugeordnet ist. Durch entsprechende Abstimmung der Intensitäten und der geometrischen Anordnung der einzelnen Lichtquellen 1 beziehungsweise Fasern kann dann durch Überlagerung des Pumplichtes aus den verschiedenen Lichtleitfasern 15 ein gewünschtes Pumplichtintensitätsprofil zur Einkopplung in den Laserresonator 2 erzeugt werden. Natürlich ist es auch möglich, den Laserresonator 2 ohne ein dazwischen gelagertes Lichtleitfaserbündel direkt an ein Pattern von mehreren entsprechend in ihrer Intensität und Geometrie abgestimmten Pumplichtquellen 1 anzukoppeln, wie dies auch bei Einzellichtquellen 1 möglich ist.

Fig. 8 zeigt eine schematische Darstellung, wie die Intensitätsverteilung, vorzugsweise im Fokus 6, des Pumplichtes 4 der Einkoppeloptik 3 gemessen werden kann. Als Messgerät kann dabei ein beim Stand der Technik bekannter so genannter "CCD-Beam-Profiler" 17 verwendet werden. Bei einer ersten Variante der Messung ist dabei vorgesehen, den Laserresonator 2 zunächst aus dem Fokusbereich 6 bzw. Messbereich zu entfernen, um dann in diesem Bereich mittels des Beam-Profilers 17 die Intensitätsverteilung zu messen. Diese Art der Bestimmung des Intensitätsprofils liegt die Erkenntnis zugrunde, dass die lichtbrechenden Eigenschaften des Laserresonators 2 zwar den Fokus 6 (falls vorhanden) in Längsrichtung 7 verschieben, die Form der Intensitätsverteilung I, auf die es hier erfindungsgemäß ankommt, aber nicht wesentlich verändern. Daher ist die Bestimmung des Intensitätsprofils des Pumplichtes 4, vorzugsweise im Fokus 6, auch nach Entfernung des sonst dort angeordneten Laserresonators 2 zulässig. Alternativ ist es aber auch möglich, die Lage des Fokus 6 bzw. des Messbereichs im Laserresonator 2 unter Berücksichtigung der optischen Eigenschaften der Einkoppeloptik 3 und des Laserresonators 2 zu berechnen und den Laserresonator dann im Bereich des Fokus 6 bzw. Messbereichs auseinander zu schneiden, sodass mittels Beamprofiler 17 dann die Intensitätsverteilung I im Fokus 6 bzw. im Messbereich im Laserresonator 2 gemessen werden kann. Als Fokus 6 ist jedenfalls jener Bereich des Strahlverlaufes des Pumplichtes 4 nach der Einkoppeloptik 3 anzusehen, an dem die Strahlintensitäten am höchsten sind.Bei Einkopplung von Pumplicht mit parallelen Strahlen ist es egal, wo der Messbereich im Bereich des Laserresonators gewählt wird. Bei Pumplicht mit divergentem Strahlenverlauf ist der Messbereich dort zu wählen, wo die Strahlintensitäten im Bereich des Laserresonators 2 am höchsten sind. Dies wird in der Regel der Bereich des Eingangsspiegels 8 sein.

## Patentansprüche

1. Laserzündvorrichtung für eine Brennkraftmaschine, insbesondere für einen Gas-Otto-Motor, mit mindestens einer Pumplichtquelle und mindestens einem von der Pumplichtquelle longitudinal gepumpten, insbesondere passiv gütegeschalteten, Laserresonator sowie insbesondere mit mindestens einer Einkoppeloptik zum Einkoppeln von Pumplicht der Pumplichtquelle in den Laserresonator, **dadurch gekennzeichnet, dass**, vorzugsweise in einem Fokus (6) der Einkoppeloptik (3), ein erster Strahldurchmesser (12) des in den Laserresonator (2) einzubringenden oder eingebrachten Pumplichts (4), gemessen bei einer Pumplichtintensität (I_{0,6}) von 60 % der maximalen Pumplichtintensität (Iₘₐₓ), mindestens 80 %, vorzugsweise mindestens 85 %, eines zweiten Strahldurchmessers (13), gemessen bei einer Pumplichtintensität (I_{0,135}) von 13,5 % der maximalen Pumplichtintensität (Iₘₐₓ), beträgt.

2. Laserzündvorrichtung nach Anspruch 1, **dadurch gekennzeichnet, dass** der Laserresonator (2) in Strahlrichtung (7) des Pumplichtes (4) hintereinander angeordnet einen Eingangsspiegel (8) und ein laseraktives Medium (9) und einen Q-Switch (10) und einen Ausgangsspiegel (11) aufweist.

3. Laserzündvorrichtung nach Anspruch 2, **dadurch gekennzeichnet, dass** das Pumplicht (4) über den Eingangsspiegel (8) in den Laserresonator (2) einkoppelbar ist.

4. Laserzündvorrichtung nach einem der Ansprüche 1 bis 3, **dadurch gekennzeichnet, dass** die Pumplichtintensität (I) im Bereich des ersten Strahldurchmessers (12) kein relatives Minimum (14) mit einer Abweichung von höchstens 10 %, vorzugsweise höchstens 5 %, von der maximalen Pumplichtintensität (Iₘₐₓ) aufweist.

5. Laserzündvorrichtung nach einem der Ansprüche 1 bis 3, **dadurch gekennzeichnet, dass** die Pumplichtintensität (I) im Bereich des ersten Strahldurchmessers (12) ein, vorzugsweise zentrales, relatives Minimum (14) mit einer Abweichung von mindestens 10% von der maximalen Pumplichtintensität (Iₘₐₓ) aufweist.

6. Laserzündvorrichtung nach einem der Ansprüche 1 bis 3, **dadurch gekennzeichnet, dass** die Pumplichtintensität (I) im Bereich des ersten Strahldurchmessers mindestens zwei, vorzugsweise mehrere, voneinander getrennte relative Minima (14) mit einer Abweichung von jeweils mindestens 10 % von der maximalen Pumplichtintensität (Iₘₐₓ) aufweist.

7. Laserzündvorrichtung nach einem der Ansprüche 1 bis 3, **dadurch gekennzeichnet, dass** die Pumplichtintensität (I) im Bereich des ersten Strahldurchmessers (12) in einer Draufsicht auf den Querschnitt des Pumplichtes (4) mindestens ein linienförmiges, vorzugsweise ringförmiges, relatives Minimum (14) aufweist.

8. Laserzündvorrichtung nach einem der Ansprüche 1 bis 7, **dadurch gekennzeichnet, dass** die Pumplichtintensität (I) über den gesamten unteren Strahldurchmesser (13) mindestens 13,5 % der maximalen Pumplichtintensität (Iₘₐₓ) beträgt.

9. Laserzündvorrichtung nach einem der Ansprüche 1 bis 8, **dadurch gekennzeichnet, dass** die Pumplichtintensität (I) über den gesamten oberen Strahldurchmesser (12) mindestens 60 % der maximalen Pumplichtintensität (Iₘₐₓ) beträgt.

10. Laserzündvorrichtung nach einem der Ansprüche 1 bis 9, **dadurch gekennzeichnet, dass** eine Pumplichtübertragungsvorrichtung zur Übertragung des Pumplichtes (4) von der Pumplichtquelle (1) zu der Einkoppeloptik (3) mindestens eine Lichtleitfaser (15) aufweist, wobei die Lichtleitfaser (15) zur Herstellung der Verteilung der Pumplichtintensität (I) gebogen ist.

11. Laserzündvorrichtung nach einem der Ansprüche 1 bis 10, **dadurch gekennzeichnet, dass** eine Pumplichtübertragungsvorrichtung zur Übertragung des Pumplichtes (4) von der Pumplichtquelle (1) zu der Einkoppeloptik (3) oder die Einkoppeloptik (3) selbst mindestens ein strahlführendes und/oder strahlabsorbierendes optisches Element zur Herstellung der Verteilung der Pumplichtintensität (I) aufweist.

12. Laserzündvorrichtung nach Anspruch 11, **dadurch gekennzeichnet, dass** das strahlführende Element eine diffraktive Optik oder eine im Zentrum zerstreuend und am Rand fokussierend wirkende Optik aufweist.

13. Laserzündvorrichtung nach einem der Ansprüche 1 bis 12, **dadurch gekennzeichnet, dass** eine Pumplichtübertragungsvorrichtung zur Übertragung des Pumplichtes von der Pumplichtquelle (1) zu der Einkoppeloptik (3) ein Bündel von Lichtleitfasern (15) und/oder die Laserzündvorrichtung mehrere Pumplichtquellen (1) zur Herstellung der Verteilung der Pumplichtintensität (I) aufweist.

14. Brennkraftmaschine, insbesondere Gas-Otto-Motor, mit einer Laserzündvorrichtung nach einem der Ansprüche 1 bis 13.
